# EUROPEAN PATENT SPECIFICATION

(11) **EP 1 889 244 B1**
(45) Date of publication and mention of the grant of the patent: **18.01.2012**
(21) Application number: 05760307.8
(22) Date of filing: 20.07.2005
(51) Int. Cl.: G09F 3/03, F16G 11/04

(54) **MONOBLOCK CABLE SEAL**
MONOBLOCK-KABELDICHTUNG
FICELLE A PLOMBER MONOBLOC

(30) Priority: 09.02.2005 MD 20050037
(43) Date of publication of application: 20.02.2008
(73) Proprietor: Cerbari, Alexandru, Kishinev 2008 (MD); Musinschi, Valerii, Kishinev 2015 (MD); Papusoi, Serghei, Kishinev 2075 (MD)
(72) Inventor: CERBARI, Alexandru, 19-42, Kishinev, 2008 (MD); MUSINSCHI, Valerii, 16-40 Kishinev, 2015 (MD); PAPUSOI, Serghei, Kishinev, 2075 (MD)
(74) Representative: Jeck, Anton
(86) International application number: PCT/MD2005/000003
(87) International publication number: WO 2006/085735

(56) References cited:
- RU-C1- 2 111 329
- US-A- 5 222 776
- US-A1- 2004 195 556

## Description

The invention relates to the means for locking-sealing of material objects transported mainly through customs, with the view of preventing the unauthorized access to them, in particular of refrigerators, vans, tanks, cars and containers of the railway, sea and air transport, of freights transported in railway cars and containers, trucks etc.

It is known a monoblock cable seal containing a metallic body, wherein there is made a longitudinal blind channel, wherein one end of the cable is fixed, a longitudinal through channel for cable placement therein, at the same time the through and blind channels are made parallel to each other so that the outlet of the blind channel and the inlet of the through channel are disposed onto one lateral face of the body, as well as an oblique hole made into the body and communicating with the longitudinal through channel, wherein there is placed a spring-loaded stopper element made in the form of a ball for interaction with the cable. A cable seal of this type is shown in RU2111329 C1.

The known monoblock cable seal does not possess sufficient reliability. This is conditioned by the fact that between the rigidly fixed cable end and its free end in the as-closed state, there is formed the cable loop, at the application of the stretching force to which it is possible both the slippage and turning-through of the cable about the spring-loaded ball and the axial shift of its fixed end. This can become the cause of ill-intentioned unsealing of the seal ant its repeated locking without detecting the fact of ill-intentioned unsealing.

These shortcomings of the known monoblock cable seal set a limit on its use, mainly, when there are made high demands of mechanical strength and reliability of the device.

The problem the proposed invention resolves consists in increasing the reliability of the seal with respect to the unauthorized unsealing, in combination with the simplicity of the construction, adaptability to manufacture, minimal overall dimensions and cheapness of manufacture permitting to ensure its wide application.

The undertaken task is solved by the fact that the monoblock cable seal contains a body, wherein there is made a longitudinal blind channel, wherein one end of the cable is fixed, a longitudinal through channel for cable placement therein. The blind and through channels are made parallel to each other so that the outlet of the blind channel and the inlet of the through channel are disposed onto one lateral face of the body. Into the body there is also made an oblique hole communicating with the longitudinal through channel, wherein there is placed a spring-loaded stopper element for interaction with the cable. Novelty consists in that the body is made all-metal, and one end of the cable is additionally fixed by means of body deformation in the place of disposition of the blind channel with subsequent excessive bent thereof with 180°. Into the body parallel to the oblique hole there is made an additional oblique hole communicating with the additional through channel made into the body parallel to the longitudinal through channel for cable placement therein, at the same time the outlet of the through channel and the inlet of the additional through channel is placed onto one lateral face of the body, and between the outlet of the through channel and the inlet of the additional through channel there is made a transitory groove for cable placement, connecting them, protected by lateral prominences. From the outside the body is covered with a high-durable plastic shell.

The body of the proposed monoblock cable seal is made all-metal of rectangular shape and presence of the plastic shell prevents the access to its elements in the as-closed state, makes it more convenient in exploitation and permits to apply onto the external plane surfaces of the body the necessary sealed information.

The invention is explained by drawings, where:

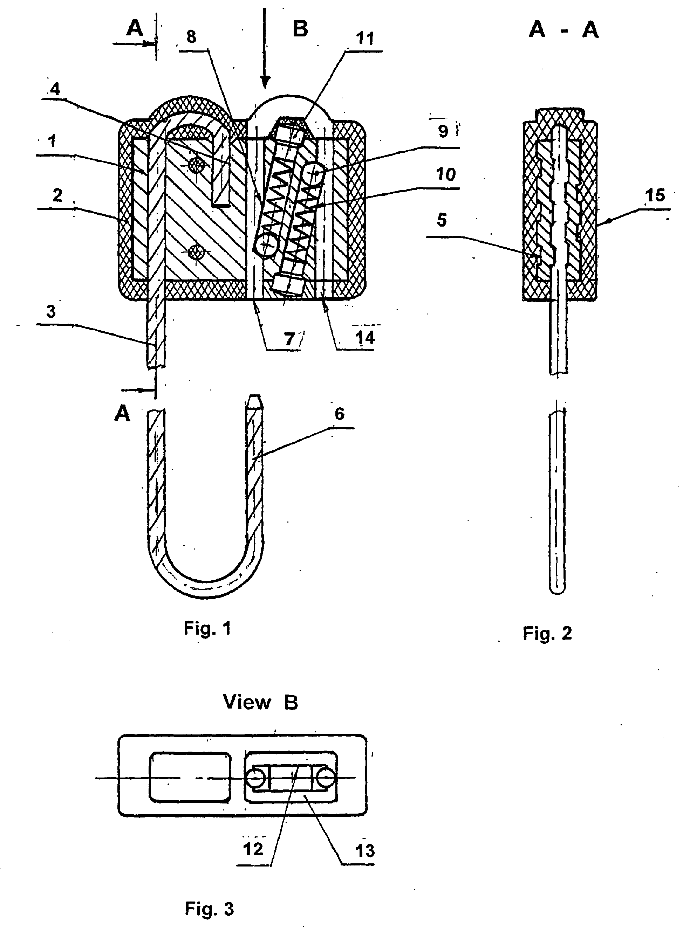

Fig. 1- monoblock cable seal, general view;
fig. 2 - view A-A fig. 1;
fig. 3 - view B fig. 1.

The monoblock cable seal contains a metal body 1 in a plastic shell 2, a cable 3, one end of which 4 is additionally fixed by means of body deformation in the place of disposition of the blind channel 5 with subsequent excessive bent thereof with 180°, and the free end 6 of the cable 3 is passed through two parallel longitudinal through channels 7 and 14 of a diameter equal to the diameter of the cable 3, freely placed therein when locking. At an angle with the longitudinal through channels 7 and 14 into the body there are made two oblique holes 8 communicating with the longitudinal through channels 7 and 14, wherein there are placed elements 9 fixing the cable 3 section, made in the form of balls spring-loaded by springs 10, the springs 10 bear against blank plugs 11 with plane end face, pressed into the body 1 on the outside, and the fixing elements 9 are placed in opposite direction to each other. At the same time the outlet of the through channel 7 and the inlet of the additional through channel 14 is placed onto one lateral face of the body 1, and between the outlet of the through channel 7 and the inlet of the through channel 14 there is made a transitory groove 12, connecting them, protected by lateral prominences 13, preventing the access to the cable 3 in the as-closed state, into the groove the cable 3 tests the excessive bent with 180°.

The body 1 of the proposed monoblock cable seal is made all-metal of rectangular shape and presence of the plastic shell 2 prevents the access to its elements in the as-closed state, makes it more convenient in exploitation and permits to apply onto the external plane surfaces 5 of the body the necessary sealed information.

The proposed monoblock cable seal is used in the following way. After application onto the face of the plastic shell 15 of the necessary sealed information, at the sealing the free end 6 of the cable 3 is passed through the brackets of the sealed object and then through the longitudinal through channel 7, wherein at the interaction with the fixing element the ball 9 falls into the oblique hole, ensuring the free advance of the cable 3 up to tightening of the loop around the brackets of the sealed object. Further the free end 6 of the cable 3 is passed through the second longitudinal through channel 14 tightening it up to the complete hiding into the protective prominences 13 of the groove 12.

Thus, presence of two excessive bents of the cable 3 in combination with the double fixation of the cable and placement of the fixing elements into the oblique cylindrical holes opposite to each other, permitted to create a cable seal of high mechanical strength, enduring a load of 5 KN, and the plastic shell 2 of the body 1 permitted to ensure a high reliability of the seal, making impossible the attempts of extracting the cable with the view of unauthorized unsealing thereof.

The authorized unsealing of the device is realized by cutting through the cable section, at the same time the repeated locking thereof is excluded.

Thus, the proposed construction of the monoblock cable seal in the represented totality of features is characterized, compared with the known analogues, in the simplicity, high reliability and ease of exploitation.

## Claims

1. Monoblock cable seal containing a body (1), wherein there is made a longitudinal blind channel (5), wherein one end (4) of the cable (3) is fixed, a longitudinal through channel (7) for cable placement therein, at the same time the blind and through channels are made parallel to each other so that the outlet of the blind channel and the inlet of the through channel are disposed onto one lateral face of the body, as well as an oblique hole (8) made into the body, wherein there is placed a spring-loaded stopper element for interaction with the cable and communicating with the longitudinal through channel, **characterized in that** the body is made all-metal, and one end of the cable (3) is additionally fixed by means of body deformation in the place of disposition of the blind channel (5) with subsequent excessive bent thereof with 180°, into the body parallel to the oblique hole there is made an additional oblique hole communicating with the additional through channel (14) made into the body parallel to the longitudinal through channel (7) for cable placement therein, at the same time the outlet of the through channel and the inlet of the additional through channel is placed onto one lateral face of the body, and between the outlet of the through channel and the inlet of the additional through channel there is made a transitory groove (12) for cable placement, connecting them, protected by lateral prominences (13).

2. Monoblock cable seal, according to claim 1, **characterized in that** from the outside the body is covered with a high-durable plastic shell (15).

## Patentansprüche

1. Monoblock-Kabelverschluss mit einem Körper (1), in dem ein längslaufender Sackkanal (5) angeordnet ist, in dem das eine Ende (4) des Kabels (3) befestigt ist, ferner mit einem längslaufenden Durchgangskanal (7) zur Aufnahme des Kabels (3), wobei der Sackkanal (5) und der Durchgangskanal (7) von einer Seitenfläche des Körpers (1) ausgehen, ferner mit einem im Körper (1) angeordneten Schrägloch (8), in dem ein federbelastetes Verschlusselement zum Festlegen des Kabelendes und zum Verbinden mit dem längslaufenden Durchgangskanal (7) angeordnet ist,
**dadurch gekennzeichnet, dass**
- der Körper (1) aus Ganzmetall hergestellt ist,
- ein Ende des Kabels (3) zusätzlich befestigt ist, und zwar mittels einer Körperformänderung an der Stelle der Anordnung des Sackkanals (5) mit einer darauffolgenden, exzessiven Biegung dieses Kanals um 180°,
- im Körper parallel zum Schrägloch (8) ein zusätzliches Schrägloch (10) vorgesehen ist, das mit einem zusätzlichen Durchgangskanal (14) verbunden ist, der im Körper parallel zum längslaufenden Durchgangskanal (7) angeordnet ist und der zur Aufnahme des Kabels dient,
- gleichzeitig der Ausgang des Durchgangskanals (7) und der Eingang des zusätzlichen Durchgangskanals (14) an derselben Seitenfläche des Körpers angeordnet sind und
- zwischen dem Ausgang des Durchgangskanals (7) und dem Eingang des zusätzlichen Durchgangskanals (14) eine diese Kanäle verbindende Übergangsnut (12) zur Kabelaufnahme vorgesehen ist, die durch seitliche Vorsprünge (13) geschützt ist.

2. Monoblock-Kabelverschluss nach Anspruch 1,
**dadurch gekennzeichnet,**
**dass** der Körper (1) von der Außenseite mit einem hochbeständigen Kunststoffmantel (15) abgedeckt ist.

## Revendications

1. Ficelle à plomber monobloc contenant un corps (1), dans lequel il est réalisé un canal borgne longitudinal (5), dans lequel une extrémité (4) de la ficelle (3) est fixée, un canal traversant longitudinal (7) pour le positionnement de la ficelle à l'intérieur de celui-ci, en même temps les canaux borgne et traversant sont réalisés parallèlement l'un à l'autre de sorte que la sortie du canal borgne et l'entrée du canal traversant sont disposées sur une face latérale du corps, de même qu'un trou oblique (8) réalisé dans le corps, dans lequel il est placé un élément de butée à ressort pour une interaction avec la ficelle et communiquant avec le canal traversant longitudinal, **caractérisée en ce que** le corps est constitué entièrement de métal et une extrémité de la ficelle (3) est fixée de plus au moyen d'une déformation du corps à l'endroit de la disposition du canal borgne (5) avec une courbure excessive ultérieure de celui-ci de 180°, dans le corps parallèle au trou oblique, il est réalisé un trou oblique supplémentaire communiquant avec le canal borgne supplémentaire (19) réalisé dans le corps parallèle au canal traversant longitudinal (7) pour un positionnement de la ficelle dans celui-ci, en même temps la sortie du canal traversant et l'entrée du canal traversant supplémentaire sont situées sur une face latérale du corps, et entre la sortie du canal traversant et l'entrée du canal traversant supplémentaire est réalisée une rainure de transition (12) pour le positionnement de la ficelle, les reliant, protégée par des protubérances latérales (13).

2. Ficelle à plomber monobloc, selon la revendication 1, **caractérisée en ce que** depuis l'extérieur, le corps est recouvert d'une enveloppe en matière plastique extrêmement résistante (15).
